# EUROPEAN PATENT APPLICATION

(11) **EP 2 487 774 A2**
(43) Date of publication of application: **15.08.2012**
(21) Application number: 11174929.7
(22) Date of filing: 21.07.2011
(51) Int. Cl.: H02J 7/00

(54) **A recharger**

(30) Priority: 11.02.2011 US 931814
(71) Applicant: Mitel Networks Corporation, Ottawa, ON K2K 2W7 (CA)
(72) Inventor: Couse, Peter, Ottawa, Ontario K2C 0G5 (CA)
(74) Representative: Venner Shipley LLP

(57) **Abstract**

A system and method for replacing rechargeable batteries is disclosed. The method comprises providing a battery recharging device having at least two battery recharging locations including at least one open/unoccupied battery recharging location. The rechargeable battery is secured from removal from the battery recharging location until such time as a second rechargeable battery is inserted into a second unoccupied battery recharging location.

## Description

### FIELD

This invention relates generally to a recharger.

### BACKGROUND

Rechargeable batteries provide several advantages over traditional disposable chemical batteries, including significant cost savings over the life of the battery and a reduction in pollution due to the ability of rechargeable batteries to be reused. However, rechargeable batteries only provide these advantages if they can be recharged.

It can be difficult to remember to recharge batteries. This is especially true in situations where battery operated devices are used by numerous people, with no one person being responsible for the upkeep of the devices.

For instance, in common use rooms within a business, such as conference rooms, a variety of battery operated devices are often used. The battery operated devices include laser pointers and remote controls for projectors, display monitors, lighting, projection screens, and so forth. The batteries charge is depleted over time. However, there is no user responsible to replace them when they have lost their charge.

Moreover, there are typically not rechargeable batteries available when they are needed. This results in an employee spending significant time to track down an information technology or facilities person who can provide replacement batteries. Often, the employee may not bother replacing the batteries due to time limits. This perpetuates the problem for subsequent conference room users.

Thus, many businesses are not able to take advantage of the environmental and cost savings provided by rechargeable batteries due to the difficulties maintaining a supply of rechargeable batteries that can be easily accessed and replaced by those using the battery operated devices.

A first aspect of the invention provides a method for replacing rechargeable batteries in a battery recharger, the battery recharger comprising at least two battery recharging locations configured to accept a rechargeable battery, the method comprising:
detecting a first rechargeable battery inserted into one of the unoccupied battery recharging locations;
securing the first rechargeable battery from being removed from the battery recharging location; and
inserting a second rechargeable battery into a second unoccupied battery recharging location, wherein only insertion of the second rechargeable battery unsecures the first rechargeable battery to allow removal of the first rechargeable battery from the battery recharger.

A second aspect of the invention provides a system for replacing rechargeable energy storage devices, comprising:
an energy storage device recharger having at least two energy storage device recharging locations and at least one of the locations being unoccupied;
a means for securing from removal a first rechargeable energy storage device inserted into one of the at least two energy storage device recharging locations; and
a means for releasing the first rechargeable energy storage device only when a second rechargeable energy storage device is inserted into a second unoccupied energy storage device recharging location.

A third aspect of the invention provides a battery recharging device, comprising:
a battery recharger having at least two battery recharging locations including at least one unoccupied battery recharging location;
a securing device operable to secure from removal a first rechargeable battery when the rechargeable battery is inserted into one of the at least two battery recharging locations; and
a release operably coupled to the securing device to release the securing device only when a second rechargeable battery is inserted into a second unoccupied battery recharging location.

### BRIEF DESCRIPTION OF THE DRAWINGS

Features and advantages of the invention will be apparent from the detailed description which follows, taken in conjunction with the accompanying drawings, which together illustrate, by way of example, features of the invention; and, wherein:
Figure 1a illustrates an example battery recharging system having a first rechargeable battery secured from removal in accordance with one example embodiment of the present invention;
Figure 1b illustrates the example battery recharging system of Figure 1a having a second rechargeable battery inserted to allow the first battery to be removed in accordance with an embodiment of the present invention;
Figure 2 illustrates another embodiment of the example battery recharging system of

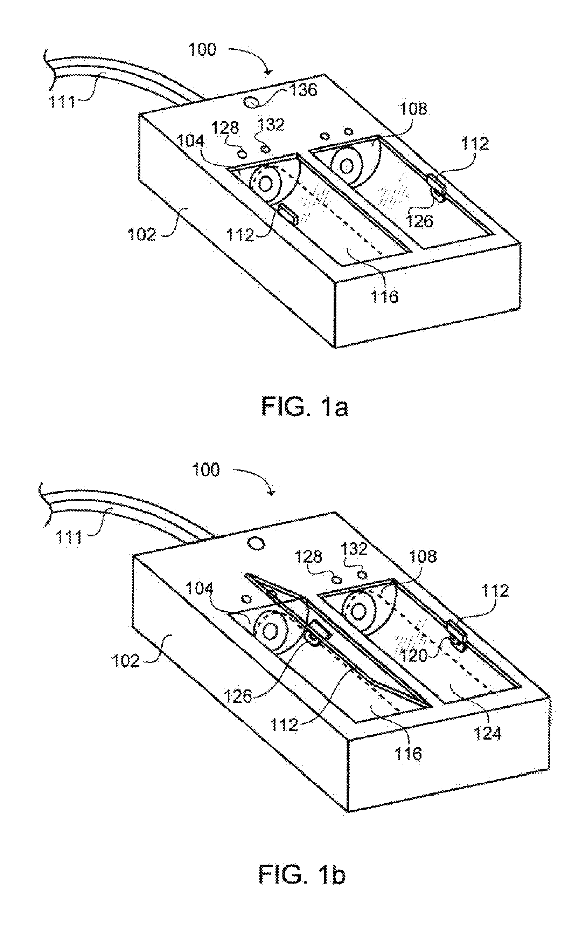

Figure 1a with an electric plug directly coupled to a body of the battery recharging device in accordance with an embodiment of the present invention;

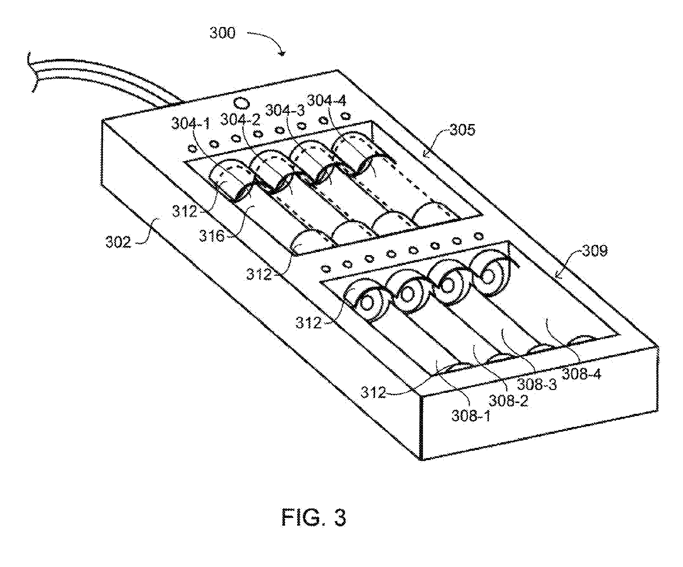

Figure 3 illustrates an example battery recharging system configured with two sets of four battery recharging locations in accordance with an embodiment of the present invention;

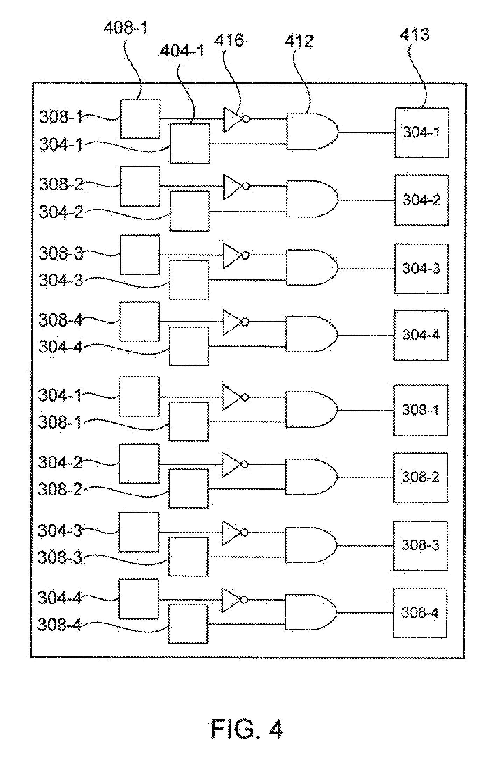

Figure 4 illustrates an example circuit diagram to secure from release rechargeable batteries inserted into the system of Figure 3 in accordance with an embodiment of the present invention; and

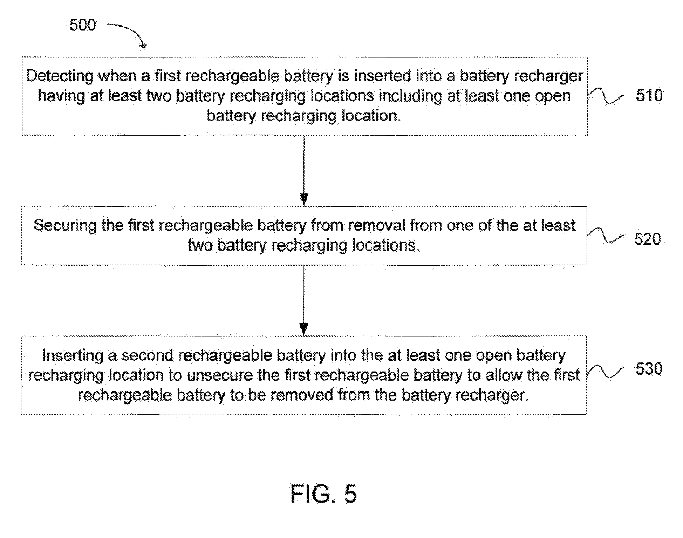

Figure 5 depicts a flow chart of a method for replacing rechargeable batteries in accordance with an embodiment of the present invention.

Reference will now be made to the exemplary embodiments illustrated, and specific language will be used herein to describe the same. It will nevertheless be understood that no limitation of the scope of the invention is thereby intended.

### DETAILED DESCRIPTION

### DEFINITIONS

As used herein, the term "substantially" refers to the complete or nearly complete extent or degree of an action, characteristic, property, state, structure, item, or result. For example, an object that is "substantially" enclosed would mean that the object is either completely enclosed or nearly completely enclosed. The exact allowable degree of deviation from absolute completeness may in some cases depend on the specific context. However, generally speaking the nearness of completion will be so as to have the same overall result as if absolute and total completion were obtained. The use of "substantially" is equally applicable when used in a negative connotation to refer to the complete or near complete lack of an action, characteristic, property, state, structure, item, or result.

### EXAMPLE EMBODIMENTS

An initial overview of technology embodiments is provided below and then specific technology embodiments are described in further detail later. This initial summary is intended to aid readers in understanding the technology more quickly but is not intended to identify key features or essential features of the technology nor is it intended to limit the scope of the claimed subject matter. The following definitions are provided for clarity of the overview and embodiments described below.

Rechargeable batteries offer significant cost savings and reduced environmental impact over conventional chemical disposable batteries. However, it can be difficult to maintain a supply of recharged batteries. This is especially true in common locations in businesses where no single individual is responsible for replacing batteries in electronic devices.

Accordingly, a system and method for replacing rechargeable batteries is disclosed. The system and method allow a supply of charged batteries to be produced. The charged batteries are secured within a battery charger. The battery charger is configured such that the batteries cannot be removed under typical operating conditions without first inserting a rechargeable battery. By requiring a user to insert a rechargeable battery in order to remove a rechargeable battery, the system provides a continuous supply of charged batteries, thereby enabling rechargeable batteries to be used in devices in common rooms such as conference rooms. Any person in a conference room or other location is substantially guaranteed to have a supply of rechargeable batteries when they are needed to replace discharged batteries used in electronic devices.

For instance, an employee hosting a meeting may enter a conference room and discover that the charge on the batteries in the remote control for the video projector is low. A battery charger is plugged into a socket in the conference room. The battery charger can contain a number of charged batteries. In one example, the battery charger may include eight recharging locations that have four charged batteries and four open locations. The four charged batteries are secured from removal from the battery charger. The employee can simply remove the batteries from the remote control and insert the batteries into the open locations in the battery charger. Each time a battery is inserted into an open location, a corresponding charged battery is released, allowing the employee to remove it. This requires the employee to insert a battery for every charged battery that is to be removed. The newly inserted batteries are secured when the corresponding charged battery is removed. The battery charger ensures that there will nearly always be a supply of charged batteries in the conference room, so long as the battery charger is given sufficient time to charge the batteries that are inserted. A sufficient number of chargers can be provided in the conference room to guarantee a desired number of charged batteries are always available.

An example illustration of a battery recharging system 100 is illustrated in Figures 1a and 1b. The system is comprised of a battery charging device 102 having at least two battery recharging locations 104, 108 including at least one open battery recharging location 108. A securing device 112 is operable to secure from removal a first rechargeable battery 116 inserted into one of the at least two battery recharging locations. A release 120, shown in Figure 1b, is coupled to the battery recharging device to release the securing device 112 securing the first rechargeable battery 116 when a second rechargeable battery 124 is inserted into the at least one open battery recharging location 108. When the first rechargeable battery 116 is removed then the securing device 112 is configured to secure the second rechargeable battery 124 from removal from the battery recharging location 108 until a rechargeable battery is again inserted into the battery recharging location 104.

In the example illustrated in Figures 1a and 1b the securing device is illustrated as a door cover 112. In one embodiment, the battery recharging system can be configured to begin charging when a rechargeable battery 116 is inserted into the battery recharging location104 and the door cover 112 is closed. The door cover may be secured by mechanical and/or electrical means to keep the door cover from being opened again until a rechargeable battery 124 is inserted into the open battery recharging location 108.

For instance, the door cover 112 can include a tab 126 that is configured to receive a lock/release mechanism 120. The lock/release mechanism may be electronically or mechanically actuated to secure the tab when no battery is located in the open battery recharging location 104. The lock/release mechanism will be referred to hereinafter as the release mechanism. In one embodiment, the release mechanism at the battery recharging location 104 may be electronically actuated when the second rechargeable battery 124 is inserted into the open battery recharging location 108, as shown in Figure 1B.

Inserting the second rechargeable battery 124 acts to electronically complete a circuit in the recharging location 108. A sensor contained within the battery recharging system 100 can sense that the battery has been inserted when the circuit is completed and can send a signal to recess the release mechanism 120 on the battery recharging location 104, thereby releasing the tab 126 and allowing the door cover 112 to be opened and the first rechargeable battery 116 to be removed.

Similarly, when the first rechargeable battery 116 is removed from the battery recharging location 104 then the door cover 112, or another type of securing device, can secure the second rechargeable battery 124 from being removed from the recharging location 108 until a rechargeable battery is inserted in the open battery recharging location, which in this instance is the battery recharging location 104.

The door cover 112 over the battery recharging location 104 can function similarly to the door cover 112 over the battery recharging location 108, as previously described, with a lock/release 120 that can be inserted into the tab 126 to secure the second rechargeable battery 124 from removal when no battery is inserted into the open battery recharging location 108. Additional means may also be used to secure the door cover 112 over the rechargeable battery when there is an associated open battery recharging location. For instance, a hinge on the door cover may be configured to open only when a battery recharging location is empty or when a battery is inserted in the associated open battery recharging location. Any type of mechanical or electromechanical device can be used to secure the first rechargeable battery from removal until a second rechargeable battery is inserted in the associated open battery recharging location.

In one embodiment, the closing of the door cover 112 initiates the charging process for the inserted rechargeable battery. In this manner, while the door is ajar or in an unsecured position, the inserted rechargeable battery is not charging and may still be removed from the recharging location. Similarly, when a second rechargeable battery is inserted in an unoccupied recharging location, the lock/release 120 can be released to permit the door cover 112 to be opened. At the time the lock is released, the charging process to any inserted batteries may cease and only resume when the door cover is closed.

The battery recharging system 100 can further comprise indicators to inform a user of the status of the rechargeable battery. For example, each battery recharging location may include at least two indicators including a charging indicator 128 and a charged indicator 132. The charging indicator 128 can be used to show when a rechargeable battery is currently charging. A battery is considered to be charging when a selected amount of current flows through the battery to enable it to charge.

Once a rechargeable battery has been substantially fully charged, the charged indicator 132 can be lit to show that the battery is ready to be removed and used in an electronic device. When the rechargeable battery is substantially fully charged, the battery recharging system can be configured to turn off the recharging current so that the rechargeable battery is not damaged if it is left in the battery recharging location for an extended period of time. The battery recharging system can also include additional indicators, such as a power indicator 136 showing that the battery recharging system is connected to a power supply. In one embodiment, the charging indicator 128 and the charged indicator 132 can be represented by a single multi-colour indicator, such as a red LED that represents the charging indicator and a green LED that represents the charged indicator.

In one embodiment, the battery recharging system 100 can be powered via a standard electric cord 111. The electric cord can be configured to plug the system into a standard wall socket to provide the electric current that is used to recharge the batteries.

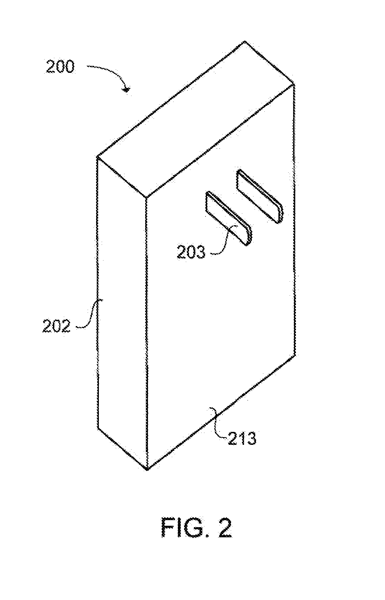

Figure 2 illustrates an example alternative embodiment in which the battery recharging system 200 can include a plug 203 that is coupled directly to the battery charging device 202. For instance, the example illustrated in Figure 2 shows the plug mounted on a back side 213 of the battery charging device, on an opposite side of the battery recharging locations. Coupling the plug directly to the battery charging device enables the battery charging device to be mounted directly to a wall socket. The wall mountable charger can act as a convenient storage location for batteries in a room such as a conference room, or other type of room where rechargeable batteries may frequently be used. When the plug is not in use, it can be swivelled and recessed in the back side 213 of the battery recharging device to enable the battery recharging device to be laid flat on a surface.

The illustrations in Figures 1a and 1b are given as examples and are not intended to be limiting. The first rechargeable battery 116 can be secured from removal from the battery recharging location 104 until the second rechargeable battery 124 is inserted into the open battery recharging location 108 using any number of securing devices, electrical devices, and/or electromechanical devices. Any type of device that is able to secure the first battery in the battery recharging location until the second battery is inserted in the open battery recharging location is considered to be within the scope of the present application.

While the use of chemical batteries has been discussed, other types of rechargeable energy storage devices may be used as well. For instance, the system 100 can be used to recharge ultra-capacitors to allow a supply of the energy storage devices to be maintained. The term "energy storage device" is intended to include chemical energy storage, such as batteries, as well as electrical energy storage, such as ultracapacitors that may be used in place of batteries to provide energy to electrical devices.

In accordance with another embodiment of the present invention, a system for replacing rechargeable energy storage devices is disclosed. The system comprises an energy storage device recharging system 102 having at least two energy storage device recharging locations 104, 108 including at least one open energy storage device recharging location 108. The example battery 116 illustrated in Figures 1a and 1b can also represent an energy storage device, which may have the same shape as a battery.

The system 100 further comprises a means for securing from removal a first rechargeable energy storage device 116 inserted into one of the at least two energy storage device recharging locations. The system additionally comprises a means for releasing the securing device securing the first rechargeable energy storage device when a second rechargeable energy storage device 124 is inserted into the at least one open energy storage device recharging location.

The means for securing from removal the first rechargeable energy storage device 116 can include a broad array of electrical means, mechanical means, and/or electromechanical means. For example, a spring loaded catch may be positioned above the position where a rechargeable energy storage device can be located in each energy storage device recharging location 104, 108. When an energy storage device is inserted then the spring loaded catch can recess, allowing the energy storage device to be inserted into the recharging location. The spring loaded catch can be coupled to an electromechanical device that secures the catch from recessing when the energy storage device recharging location is empty or when there is no rechargeable energy storage device inserted in an associated open energy storage device recharging location 108. When a rechargeable energy storage device is inserted into the energy storage device recharging location 108 then the circuit can be completed and a signal can be sent to the electromechanical device, which can be actuated to allow the spring loaded catch to recess to allow the rechargeable energy storage device to be released from the energy storage device recharging location 104.

In another embodiment, the energy storage device recharging locations 104, 108 can be sufficiently recessed within the energy storage device recharging device 102 that it makes it difficult to remove a rechargeable energy storage device inserted into one of the energy storage device recharging locations. A rechargeable energy storage device can be ejected from the recessed energy storage device recharging location using a mechanical or electromechanical device when a second rechargeable energy storage device is inserted into an associated energy storage device recharging location 104.

The means for releasing the securing device securing the first rechargeable energy storage device can also include electrical means, mechanical means, and electromechanical means. The means for releasing the securing device can be mechanically or electrically connected with the means for securing the rechargeable energy storage device. For example, the energy storage device recharging locations 104, 108 can be mechanically inter-connected such that inserting the second rechargeable energy storage device into the open energy storage device recharging location 108 can cause the first rechargeable energy storage device 116 to be mechanically ejected from the energy storage device recharging location 104. The means for releasing can also include an electromechanical device that is allowed to recess when the second rechargeable energy storage device is inserted into the associated open energy storage device recharging location. Additional release means are also possible. Any type of release means that enables the first rechargeable energy storage device to be released when a second rechargeable energy storage device is inserted in an associated energy storage device recharging location is considered to be within the scope of the present invention.

While only two battery recharging locations 104, 108 are illustrated in Figures 1a and 1b, this is not intended to be limiting. For instance, the battery recharging device 102 can include as many as 4, 6, 8, 10 or more of battery recharging locations.

In one example, the battery recharging device can include four battery recharging locations with an open recharging location adjacent each of the battery recharging locations for a total of eight recharging locations. Inserting a rechargeable battery in one of the open recharging locations will allow the rechargeable battery in the adjacent recharging location to be removed. Any number of pairs of recharging locations located adjacent to an open recharging location can be included in the battery charger. The adjacent pairs can be configured to behave as described previously with respect to Figures 1A and 1B.

Alternatively, the battery recharging locations and the open recharging locations can be grouped. For instance, Figure 3 provides an example illustration of a battery recharging system 300 having two groupings 305, 309 of battery recharging locations. In this example there are four battery recharging locations in each grouping. However, each grouping may include from one to ten or more recharging locations. Each battery recharging location 304 in the first grouping 305 can be associated with a battery recharging location 308 in the second grouping. For instance, battery recharging location 304-1 can be associated with battery recharging location 308-1. Battery recharging location 304-2 can be associated with battery recharging location 308-2. Similarly, 304-3 and 304-4 can be associated with 308-3 and 308-4, respectively.

Each battery recharging location 304, 308 can include a securing device operable to secure from removal a first rechargeable battery inserted into one of the battery recharging locations 304, 308. A release is coupled to the battery recharging device to release the securing device securing the first rechargeable battery when a second rechargeable battery is inserted into an open battery recharging location.

In one example, a rechargeable battery 316 may be inserted into a battery recharging location 304-1 in the first grouping 305. A securing device, such as a cover 312 can be recessively coupled to the battery recharging device 302 at the top and bottom of each battery recharging location 304, 308. When a rechargeable battery 316 is inserted into the battery recharging location 304-1 then the cover 312 at the top and bottom of the battery recharging location can hold the rechargeable battery in place as long as a corresponding battery recharging location 308-1 in the second grouping 309 is open.

A mechanical or electromechanical device can be used to cause the covers 312 to be substantially rigid (i.e. non-recessive) when the rechargeable battery 316 is inserted into the battery recharging location 304-1 (thereby completing the circuit) while the corresponding battery recharging location 308-1 is empty. When a second rechargeable battery is inserted in the corresponding battery recharging location 308-1 in the second grouping 309 then the circuit for that battery recharging location will be completed and a signal can be sent to allow the covers 312 at the top and bottom of the associated battery recharging location 304-1 to be recessive, allowing the first rechargeable battery 316 to be removed from the battery recharging location 304-1.

When no batteries are present in either associated battery recharging location, such as in 304-2 and 308-2, resulting in both circuits being open, then the covers 312 over each battery recharging location can be recessive, enabling a battery to be inserted into one of the battery recharging locations. Once a rechargeable battery is inserted into one of the battery recharging locations then the covers over that battery recharging location will become rigid until a rechargeable battery is inserted into the associated open battery recharging location.

Similar to the previous example for Figures 1a and 1b, the closing or securing of the covers 312 may initiate the charging process for any inserted rechargeable batteries.

Figure 4 illustrates a block diagram of an electric circuit showing one example illustration of a circuit used to control the battery charger system 300 of Figure 3. The block diagram includes a detector 404 connected to each battery recharging location 304 and a detector 408 connected to each battery recharging location 308. In the block diagram, the detectors are numbered to show their association with a particular battery recharging location. Each detector is configured to detect when a rechargeable battery has been inserted into the battery recharging location. As previously discussed, when a rechargeable battery is inserted into a battery recharging location then an electric circuit is completed which allows current to be turned on to flow through the battery and charge the battery over time. When this occurs, then the detectors can send a signal to an AND gate 412.

For instance, when a battery is inserted in the battery recharging location 304-1, while the corresponding battery recharging location 308-1 is open, then a "high" signal is output from the detector 404-1 and a "low" signal is output by 408-1. The output of the 408-1 detector can be run through a NOT gate 416. The output of the NOT gate acts to invert the signal and output a high, resulting in an output signal from the AND gate 412 to an electromagnetic actuator 413 configured to lock the inserts 312 above the battery 316 in the 304-1 battery recharging location, thereby locking the battery in place.

When a rechargeable battery is inserted into the corresponding battery recharging location 308-1 then the electromagnetic actuator 413 will be turned off, enabling the inserts 312 to be recessed and allowing the rechargeable battery 316 to be removed from the battery recharging location 304-1. Similarly, if no battery is inserted in either of the corresponding battery recharging locations 304-1 and 308-1 then the output from the AND gate 412 will be low and the electromagnetic actuator 413 will be turned off, allowing a battery to be inserted into either location. Thus, the example circuit diagram illustrated in Figure 4 enables the inserts 312 to be locked in place only when a single battery is inserted in a battery recharging location and the associated location in the other group (305 or 309) remains open. In all other situations, the inserts can be recessed to allow batteries to be added or removed from the battery charging device 302.

The circuit diagram illustrated in Figure 4 provides one example diagram. Other types of circuits may be designed to enable a rechargeable battery to be secured in a charger until a battery is inserted into an associated battery recharging location.

The example of the battery charging system 300 in Figure 3 enables a plurality of batteries to be inserted into the charger and recharged. For instance, an employee can insert anywhere from one to four rechargeable batteries into open battery recharging locations. Inserting the rechargeable batteries into the open battery recharging locations enables the employee to remove the same number of batteries from the associated battery recharging locations in the other group. The battery charging system 300 enables multiple rechargeable batteries to be available when needed.

While the example systems displayed in Figures 1A and 1B and Figure 3 display only a single battery size, the battery charging system can include a plurality of battery sizes including but not limited to button cell, AAA, AA, C, D, and 9 volt battery sizes. The battery charging system can also be configured to accept battery packs comprising multiple batteries connected together. The battery charging system can be configured to accept any type of rechargeable battery, including but not limited to lithium ion batteries, nickel metal hydride batteries, nickel zinc batteries, nickel cadmium batteries, thin film batteries, lead-acid batteries, lithium ion polymer batteries, lithium air batteries, and so forth.

In accordance with another embodiment, a method 500 for replacing rechargeable batteries is disclosed, as depicted in the flow chart of Figure 5. The method comprises detecting 510 when a first rechargeable battery is inserted into a battery recharger having at least two battery recharging locations including at least one open battery recharging location. The method further comprises securing 520 the first rechargeable battery from removal from one of the at least two battery recharging locations. The method further includes inserting 530 a second rechargeable battery into the at least one open battery recharging location to unsecure the first rechargeable battery to allow the first rechargeable battery to be removed from the battery recharger. The method 500 may be most efficient when one rechargeable battery is removed for each rechargeable battery that is inserted. However, different ratios of inserting batteries to removal of batteries are also considered to be within the scope of the present application.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as defacto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

## Claims

1. A method for operating a battery recharger, the battery recharger comprising at least two battery recharging locations configured to accept a rechargeable battery, the method comprising:
detecting a first rechargeable battery inserted into one of the unoccupied battery recharging locations;
securing the first rechargeable battery from being removed from the battery recharging location; and
inserting a second rechargeable battery into a second unoccupied battery recharging location, wherein only insertion of the second rechargeable battery unsecures the first rechargeable battery to allow removal of the first rechargeable battery from the battery recharger.

2. The method of claim 1, further comprising securing the second rechargeable battery from being removed when the first rechargeable battery is removed.

3. The method of claim 1 or claim 2, wherein securing the first rechargeable battery from being removed further comprises securing a door over the first rechargeable battery until the second rechargeable battery is inserted into the second unoccupied battery recharging location or alternatively wherein securing the first rechargeable battery from being removed further comprises securing a top cover and a bottom cover over the first rechargeable battery until the second rechargeable battery is inserted into second unoccupied battery recharging location.

4. The method of any of claims 1 to 3, wherein securing the first rechargeable battery from being removed further comprises electronically securing the first rechargeable battery from removal until the second rechargeable battery is inserted into the second unoccupied battery recharging location using an electromechanical device.

5. The method of any preceding claim, wherein detecting further comprises coupling an electronic sensor to each battery recharging location, wherein the sensor is configured to detect at each battery recharging location when a rechargeable battery is inserted in a battery recharging location.

6. The method of claim 5, further comprising a locking circuit configured to receive a signal from the sensor when the rechargeable battery is inserted into the battery recharging location and cause the electromechanical device to secure the rechargeable battery from removal until a second signal is received from a second sensor coupled to the second battery recharging location.

7. The method of any of claims 3 to 6, wherein upon securing the door initiates a recharging process to begin on the first rechargeable battery.

8. A system comprising:
an energy storage device recharger having;
at least two energy storage device recharging locations and at least one of the locations being unoccupied;
a means for securing from removal a first rechargeable energy storage device inserted into one of the at least two energy storage device recharging locations; and
a means for releasing the first rechargeable energy storage device, the means for releasing operable only when a second rechargeable energy storage device is inserted into a second unoccupied energy storage device recharging location.

9. The system of claim 8, wherein the first and second rechargeable energy storage devices are selected from the group consisting of a battery and an ultracapacitor.

10. The system of claim 8 or claim 9, wherein the means for securing further comprises an electronically actuated means for securing the first rechargeable energy storage device from removal from one of the at least two energy storage device recharging locations until the second rechargeable energy storage device is inserted.

11. The system of any of claims 8 to 10, wherein the means for releasing the first rechargeable energy storage device is an electronically actuated means that is electronically coupled to the at least one open energy storage device recharging location.

12. The system of any of claims 8 to 11, further comprising a sensor operable to turn off a current used to charge an energy storage device located in one of the at least two energy storage device charging locations when the energy storage device has been substantially fully charged.

13. The system of any of claims 8 to 12, further comprising an indicator operable to indicate when an energy storage device that is inserted into one of the at least two energy storage device charging locations is substantially fully charged.

14. A system of any of claims 8 to 13 wherein the means for securing comprises a securing device operable to secure from removal the first rechargeable energy storage device when the first rechargeable energy storage device is inserted into one of the at least two battery recharging locations.

15. The system of claim 14, wherein the system is a battery recharging device comprising two adjacent battery recharging locations that are mechanically connected such that inserting the first rechargeable battery into a first of the two adjacent battery recharging locations results in the first rechargeable battery being secured by the securing device and inserting the second rechargeable battery into a second of the adjacent battery recharging locations causes the release of the first rechargeable battery.
